# EUROPEAN PATENT SPECIFICATION

(11) **EP 4 432 085 B1**
(45) Date of publication and mention of the grant of the patent: **08.07.2026**
(21) Application number: 22906361.5
(22) Date of filing: 07.12.2022
(51) Int. Cl.: G06F 9/50, G06F 9/445, G06F 9/48

(54) **TASK EXECUTION METHOD AND APPARATUS, AND DEVICE AND MEDIUM**
AUFGABENAUSFÜHRUNGSVERFAHREN UND -VORRICHTUNG SOWIE VORRICHTUNG UND MEDIUM
PROCÉDÉ ET APPAREIL D'EXÉCUTION DE TÂCHE, DISPOSITIF ET SUPPORT

(30) Priority: 15.12.2021 CN 202111539442
(43) Date of publication of application: 18.09.2024
(73) Proprietor: Beijing Zitiao Network Technology Co., Ltd., Beijing 100190 (CN)
(72) Inventor: WANG, Shuai, Beijing 100086 (CN)
(74) Representative: Marks & Clerk LLP
(86) International application number: PCT/CN2022/137230
(87) International publication number: WO 2023/109613

(56) References cited:
- CN-A- 108 681 486
- CN-A- 109 086 137
- CN-A- 111 324 387
- CN-A- 111 324 387
- CN-A- 113 535 346
- US-A1- 2014 019 984
- US-A1- 2014 019 984
- BERNAB� GREGORIO ET AL: "An Autotuning Engine for the 3D Fast Wavelet Transform on Clusters with Hybrid CPU + GPU Platforms", INTERNATIONAL JOURNAL OF PARALLEL PROGRAMMING, PLENUM PRESS, NEW YORK, US, vol. 43, no. 6, 15 October 2014 (2014-10-15), pages 1160 - 1191, XP035539361, ISSN: 0885-7458, [retrieved on 20141015], DOI: 10.1007/S10766-014-0328-3

## Description

### TECHNICAL FIELD

The present disclosure relates to a task execution method and apparatus, a device, and a medium.

### BACKGROUND

Many devices such as mobile terminals, desktop terminals are usually provided with a GPU (Graphics Processing Unit). In some scenarios, parameters required for executing specified tasks such as image rendering may involve a GPU sub-thread number. The GPU sub-thread number, also known as local work size, specifically refers to the number of corresponding sub-threads in a same thread bundle.

Document CN111324387A relates to an application task control method, device and system, and a terminal. The application task control method comprises the following steps: receiving equipment information and task execution information sent by a first terminal set; determining task execution configuration information according to the equipment information and the task execution information; sending task execution configuration information for the second terminal set to execute; wherein the task execution information comprises the number of threads opened for executing the application task when the terminal starts the application and the total time consumed for executing the application task; wherein the task execution configuration information comprises the number of threads.

Document US20140019984A1 relates to a parallel execution manager. The parallel execution manager may determine a parallel execution platform configured to execute tasks in parallel using a plurality of available processing threads. The parallel execution manager may include a thread count manager configured to select, from the plurality of available processing threads and for a fixed task size, a selected thread count, and a task size manager configured to select, from a plurality of available task sizes and using the selected thread count, a selected task size. The parallel execution manager may further include an optimizer configured to execute an iterative loop in which the selected task size is used as an updated fixed task size to obtain an updated selected thread count, and the updated selected thread count is used to obtain an updated selected task size. Accordingly, a current thread count and current task size for executing the tasks in parallel may be determined.

### SUMMARY

An embodiment of the present disclosure provides a task execution method applied to a target device configured with a graphics processing unit (GPU), the task execution method comprising: obtaining a configuration file in response to receiving an execution instruction for a specified task, wherein the specified task is a task executed based on the GPU, and the configuration file comprises a mapping relationship between a device category and a preferred GPU sub-thread number, wherein the preferred GPU sub-thread number is a number of a sub-thread of the GPU used by a representative device in the device category taking shortest time to execute the specified task based on the GPU of the representative device, and a GPU sub-thread number is a number of sub-threads in a same thread bundle; determining a target device category to which the target device belongs based on the configuration file; and executing the specified task by using the preferred GPU sub-thread number corresponding to the target device category; wherein the configuration file is generated by: obtaining GPU information of a plurality of devices, wherein each of the plurality of devices is configured with a GPU; categorizing the plurality of devices into a plurality of device categories based on the GPU information, each device category of the plurality of device categories corresponding to a plurality of devices; for the each device category, selecting a representative device from all devices corresponding to the each device category, obtaining the preferred GPU sub-thread number corresponding to the representative device of the each device category, and using the preferred GPU sub-thread number as the preferred GPU sub-thread number corresponding to the each device category; and generating the configuration file based on the mapping relationship between the each device category and the preferred GPU sub-thread number.

In some embodiments, the configuration file is recorded with device identifiers of a plurality of devices corresponding to each device category; and the determining of the target device category to which the target device belongs based on the configuration file comprises: searching for the device category corresponding to a device identifier of the target device in the configuration file, and using the device category searched as the target device category to which the target device belongs.

In some embodiments, the configuration file is recorded with a categorization method of the device category, the categorization method comprising categorization by a GPU manufacturer name or categorization by a GPU model; and the determining of the target device category to which the target device belongs based on the configuration file comprises: determining the target device category to which the target device belongs based on the categorization method of the device category recorded in the configuration file and GPU information of the target device.

In some embodiments, the GPU information comprises the GPU manufacturer name or the GPU model.

In some embodiments, all devices corresponding to a device category have a specific GPU commonality, and different device categories correspond to different GPU commonalities.

In some embodiments, the obtaining of the preferred GPU sub-thread number corresponding to the representative device of the each device category comprises: obtaining a plurality of candidate GPU sub-thread numbers; for each of the plurality of candidate GPU sub-thread numbers, using the each of the plurality of candidate GPU sub-thread numbers as a parameter for a preset open computing language OpenCL program, and obtaining time consumption for the representative device of the each device category to adopt the preset OpenCL program to execute the specified task; and using a candidate GPU sub-thread number corresponding to shortest time consumption as the preferred GPU sub-thread number corresponding to the representative device of the each device category.

In some embodiments, the GPU information comprises a GPU manufacturer name; and the categorizing of the plurality of devices into the plurality of device categories based on the GPU information comprises: categorizing the plurality of devices into a plurality of manufacturer categories based on the GPU manufacturer name of each of the plurality of devices, wherein all devices corresponding to each of the plurality of manufacturer categories have a same manufacturer name.

In some embodiments, the GPU information comprises a GPU model; and the categorizing of the plurality of devices into the plurality of device categories based on the GPU information comprises: categorizing the plurality of devices into a plurality of GPU model categories based on the GPU model of each of the plurality of devices, wherein all devices corresponding to each of the plurality of GPU model categories have a same GPU model.

In some embodiments, the selecting of the representative device from all devices corresponding to the each device category comprises: obtaining index data of each of the plurality of devices corresponding to the each device category based on a preset measurement index, wherein the preset measurement index comprises a market coverage rate and/or device performance; and selecting the representative device from all the devices corresponding to the each device category based on the index data of the each of the plurality of devices.

In some embodiments, the selecting of the representative device from all the devices corresponding to the each device category based on the index data of the each of the plurality of devices comprises: selecting a most typical device from all the devices corresponding to the each device category as the representative device by comparing the index data of the plurality of devices.

In some embodiments, the selecting of the representative device from all the devices corresponding to the each device category based on the index data of the each of the plurality of devices comprises: determining a median value of the index data of all the devices corresponding to the each device category based on the index data of the each of the plurality of devices; and selecting a device, of which index data is closest to the median value, from all the devices corresponding to the each device category, and using the device selected as the representative device of the each device category.

An embodiment of the present disclosure provides an electronic device, comprising: a processor; and a memory configured to store executable instructions for the processor; wherein the processor is configured to read the executable instructions from the memory and execute the executable instructions to implement the task execution method provided in the embodiments of the present disclosure.

An embodiment of the present disclosure further provides a computer-readable storage medium on which a computer program is stored, wherein the computer program is configured to perform the task execution method provided in the embodiments of the present disclosure.

An embodiment of the present disclosure further provides a computer program, comprising: instructions that, when executed by a processor, cause the processor to perform the task execution method provided in the embodiments of the present disclosure.

It should be understood that the contents described in this section are not intended to identify critical or important features of the embodiments of the present disclosure, nor are they intended to be used to limit the scope of the present disclosure. Other features of the present disclosure will be readily understood through the following description.

### BRIEF DESCRIPTION OF THE DRAWINGS

Herein, the accompanying drawings, which are incorporated in and constitute a part of this specification, illustrate embodiments of the present disclosure and, together with the description, serve to explain the principles of the present disclosure.

In order to more clearly explain the technical solutions in the embodiments of the present disclosure or in the prior art, a brief introduction will be given below for the drawings required to be used in the description of the embodiments or the prior art.
FIG. 1 is a flowchart of a task execution method provided by an embodiment of the present disclosure;
FIG. 2 is a schematic flowchart of a method for generating a configuration file provided by an embodiment of the present disclosure;
FIG. 3 is a schematic flowchart of a method for generating a configuration file provided by an embodiment of the present disclosure;
FIG. 4 is a schematic structure diagram of a task execution apparatus provided by an embodiment of the present disclosure;
FIG. 5 is a schematic structure diagram of an electronic device provided by an embodiment of the present disclosure.

### DETAILED DESCRIPTION

In order to better understand the above objects, features and advantages of the present disclosure, the solution of the present disclosure will be further described below. It should be noted that, in the case of no conflict, the embodiments of the present disclosure and the features in the embodiments may be combined with each other.

Many specific details are set forth in the following description to facilitate a full understanding of the present disclosure, but the present disclosure can also be implemented in other ways different from those described herein. Obviously, embodiments described in the description are only some embodiments of the present disclosure, and are not all of embodiments thereof.

The inventor of the present disclosure has found through research that the GPU sub-thread number can affect the efficiency of task execution, such as affecting task time consumption. However, because there are many kinds of devices configured with GPU in the market, (for example, there are thousands of models of mobile phones), it is difficult and costly to determine the appropriate GPU sub-thread number for each device type. Therefore, the straightforward way of having each device execute a task with a uniform default GPU sub-thread number can result in poor task execution effect.

Specifically, the inventor of the present disclosure has found through research that the GPU sub-thread number (i.e. local work size) can affect the performance of the GPU in executing specified tasks such as image rendering. The GPU sub-thread number is also a core parameter of OpenCL (Open Computing Language). The GPU focuses on executing highly threaded parallel processing tasks, while OpenCL is a universal parallel computing language that supports a variety of devices with a GPU, comprising mobile and desktop devices. In other words, OpenCL can widely support different types of GPUs, and the GPU sub-thread number has a significant impact on the performance of OpenCL, such as 10% -70% of its performance, mainly reflected in the impact on task execution effect. Specifically, the task execution effect is mainly reflected in the task execution time. For example, an inappropriate GPU sub-thread number will directly increase the time required to execute a given task using OpenCL. Therefore, it is desirable to find a preferred GPU sub-thread number for each device type. However, there are many kinds of devices configured with a GPU in the market (for example, there are thousands of models of mobile phones), finding a preferred GPU sub-thread number for each device requires a lot of work and is highly unrealistic. In related art, a unified default GPU sub-thread number is used for most devices to execute a task, and the task execution effect needs to be improved.

In view of this, embodiments of the present disclosure provide a task execution method and apparatus, a device, and a medium, which will be discussed in detail below for easy understanding.

In addition, the defects in the related art are also the results obtained by the applicant after practice and careful study. Therefore, the discovery process of the above defects and the solution proposed in the embodiments of the application for the above defects in the following description should be recognized as contributions made by the applicant to the application.

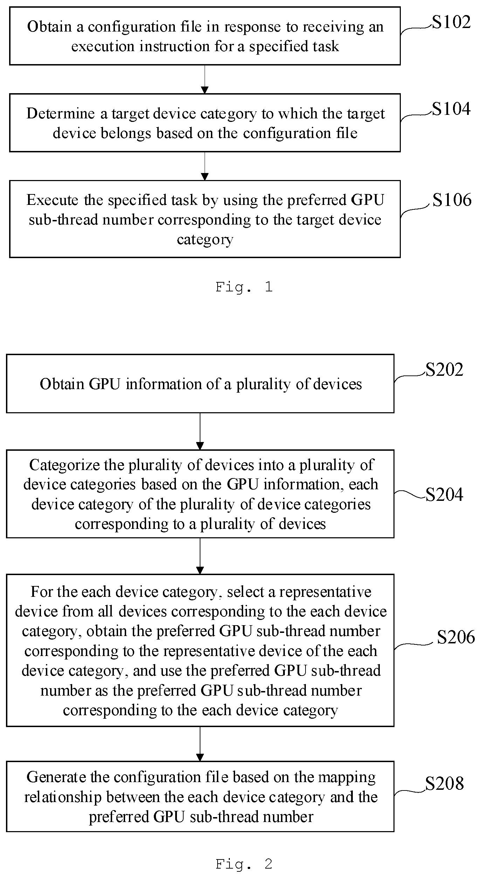

FIG. 1 is a flowchart of a task execution method provided by an embodiment of the present disclosure. The method is applied to a target device configured with a GPU. For example, the target device is a mobile terminal such as a mobile phone, a computer, etc.. As shown in FIG. 1, the method mainly comprises the following steps S102 to S106.

In step S102, a configuration file is obtained in response to receiving an execution instruction for a specified task. The specified task is a task executed based on the GPU. The configuration file comprises a mapping relationship between a device category and a preferred GPU sub-thread number, wherein the preferred GPU sub-thread number is number of a sub-thread of the GPU used by a representative device in the device category taking shortest time to execute the specified task based on the GPU of the representative device. The above device category is a category to which the device belongs.

The above specified task may be an image rendering task. In a specific example, considering the wide applicability of OpenCL to GPU, the specified task may be a task executed by an OpenCL program. The embodiments of the present disclosure does not limit the specific specified task. For example, any task executed based on OpenCL can be used as the specified task. A execution instruction for the specified task described above can be directly initiated by a user, or automatically initiated by a system/platform associated with the specified task as needed.

In some implementations, the target device can obtain the configuration file in a specified manner. When downloading the configuration file in a specified manner, the configuration file can be automatically downloaded based on a user setting when the specified task is executed, or users can be prompted to download the configuration file themselves. A user can also directly import the configuration file to a target device and store the configuration file at a specified location. On the basis of the above, the target device can directly read the configuration file from the specified location after receiving the execution instruction for the specified task. In other implementations, the target device downloads the configuration file in the specified manner described above after receiving the execution instruction for the specified task.

The above configuration file can be generated in advance and mainly comprises the mapping relationship (also known as correspondence relationship) between a device category and a preferred GPU sub-thread number. Specifically, the configuration file comprises a plurality of device categories, each device category corresponding to one preferred GPU sub-thread number. In an embodiment of the present disclosure, the plurality of devices configured with GPUs can be categorized into a plurality of device categories, each device category corresponding to a plurality of devices. All devices corresponding to each device category have a specific GPU commonality, and different device categories correspond to different GPU commonalities. In some implementations, the configuration file comprises not only the mapping relationship between the device category and the preferred GPU sub-thread number, but also device identifiers of all devices in each device category. In other implementations, in addition to the mapping relationship between the device category and the preferred GPU sub-thread number, the configuration file further comprises a categorization method of the device category. For example, if a plurality of device categories is categorized by CPU manufacturers, each device category corresponds to a name of a GPU manufacturer, and if a plurality of device categories are categorized by GPU models, each device category corresponds to a GPU model.
the preferred GPU sub-thread number corresponding to each device category in the above configuration file is number of a sub-thread of the GPU used by a representative device in the device category taking shortest time to execute the specified task based on its GPU (i.e., the GPU of that representative device). Then, the preferred GPU sub-thread number corresponding to the representative device is used as the preferred GPU sub-thread number corresponding to the device category, that is, as the preferred GPU sub-thread number corresponding to all devices in the device category. Considering that there are many kinds of devices configured with a GPU, it is costly to determine an appropriate GPU sub-thread number for each device. Therefore, in the configuration file provided in the embodiment of the present disclosure, a plurality of devices are categorized into a plurality of categories. For each category, a representative device is selected, and it is only required to determine a preferred GPU sub-thread number corresponding to the representative device. The preferred GPU sub-thread number corresponding to the representative device is used as the preferred GPU sub-thread number corresponding to the device category, which is more feasible, and can be achieved at a lower cost.

In some implementations, the representative device corresponding to a device category can be a most typical device among all devices in the device category. For example, a mid-range device in a device category may be used as a representative device. In practical applications, a representative device can be manually specified for each device category. Alternatively, device information of all devices in each device category can be obtained. Through device information comparison, a device that meets a preset rule can be automatically selected as the representative device. The preset rule can be set according to needs. For example, a device with a mid-range GPU performance parameter among all devices in a device category can be used as a representative device. In some implementations, the representative device may execute a preset OpenCL program to traverse a plurality of GPU sub-thread numbers (such as all possible thread numbers that can be enumerated) to find a least time-consuming GPU sub-thread number, and the found thread number is used as the preferred GPU sub-thread number of the representative device.

In step S104, a target device category to which the target device belongs is determined based on the configuration file.

In some embodiments, the configuration file is recorded with device identifiers of a plurality of devices corresponding to each device category. In this case, in the configuration file, the device category corresponding to a device identifier of the target device can be searched for, and the device category searched is used as the target device category to which the target device belongs. For example, there are three device categories in the configuration file (category A, category B and category C), with device identifiers a1, a2, a3~a85 belonging to category A, device identifiers b1, b2, b3~b70 belonging to category B, and device identifiers c1, c2, c3~c121 belonging to category C, and if the device identifier of the target device is b35, then a device category corresponding to the target device is the category B.

In some embodiments, the configuration file is recorded with a categorization method of the device category. The categorization method comprises categorization by a GPU manufacturer name or categorization by a GPU model. In this case, the target device category to which the target device belongs can be determined based on the categorization method of the device category recorded in the configuration file and GPU information of the target device. For example, if the configuration file comprises three device categories categorized by a GPU manufacturer name, category A corresponding to manufacturer A, category B corresponding to manufacturer B, and category C corresponding to manufacturer C, and if the GPU information of the target device shows that the manufacturer of the target device is A, then the device category corresponding to the target device is category A.

The above are only illustrative and should not be considered as a limitation.

In step S106, the specified task is executed by using the preferred GPU sub-thread number corresponding to the target device category.

It can be understood that due to the commonality of devices in the same device category, the target device usually takes less time to execute a task using the preferred GPU sub-thread number corresponding to the representative device in the device category. Compared to a default GPU sub-thread number, the above method is easy to implement and can effectively improve the task execution effect.

Heretofore, a task execution method according to some embodiments of the present disclosure is provided. In the method, a target device configured with a GPU can obtain a configuration file in response to receiving an execution instruction for a specified task, wherein the configuration file comprises a mapping relationship between a device category and a preferred GPU sub-thread number, wherein the preferred GPU sub-thread number is number of a sub-thread of the GPU used by a representative device in the device category taking shortest time to execute the specified task based on the GPU of the representative device; then determine a target device category to which the target device belongs based on the configuration file; and execute the specified task by using the preferred GPU sub-thread number corresponding to the target device category. The above method can obtain a configuration file that is recorded with the mapping relationship between a device category and a preferred GPU sub-thread number when executing a specified task, and execute the specified task by using a preferred GPU sub-thread number corresponding to a target device category to which a target device belongs, the preferred GPU sub-thread number corresponding to the target device category being a GPU sub-thread number used by a representative device in the device category to execute the specified task with the shortest time. Due to devices in the same device category usually have a commonality, the time required for the target device to execute the task using the preferred GPU sub-thread number corresponding to the representative device in the device category is usually shorter. Compared to a default GPU sub-thread number, the above method is easy to implement and can effectively improve task execution effect.

On the basis of above, an embodiment of the present disclosure further provides a method for generating a configuration file. FIG. 2 is a schematic flowchart of a method for generating a configuration file provided by an embodiment of the present disclosure. The method comprises the following steps S202 to S208.

In step S202, GPU information of a plurality of devices is obtained. Each of the plurality of devices is configured with a GPU.

In practical applications, the number of categories of the above-mentioned devices can be set according to requirements, and there is no restriction here. For example, based on mainstream devices such as mobile phones and computers in the current market, GPU information corresponding to various device models popular in the market for a certain period of time (such as the last 5 years) can be obtained. It is also possible to obtain GPU information for all available devices on the network or in the market. In some embodiments, the GPU information comprises a GPU manufacturer name or a GPU model. The GPU manufacturer name can be, for example, Qualcomm, Mali, and PowerVR, or the like, and the GPU model can be, for example, Mali G77, Mali G76, Adreno510, or the like.

In step S204, the plurality of devices are categorized into a plurality of device categories based on the GPU information, each device category of the plurality of device categories corresponding to a plurality of devices.

Since each device corresponds to GPU information, the devices can be categorized into a plurality of device categories based on GPU information, wherein each device category corresponds to a plurality of devices. All devices corresponding to each device category have a specific GPU commonality, and different device categories correspond to different GPU commonalities. For example, in some embodiments, although there are many devices, each of which is configured with a GPU, there are currently few GPU manufacturers, and many devices adopt GPUs produced by the same manufacturer. Therefore, the plurality of devices can be categorized into a plurality of categories based on GPU manufacturers. For another example, the existing number of GPU models is far less than the number of device types. Some devices adopt the same GPU model. Therefore, the plurality of devices can be categorized into a plurality of categories based on GPU models.

In step S206, for the each device category, a representative device is selected from all devices corresponding to the each device category, the preferred GPU sub-thread number corresponding to the representative device of the each device category is obtained, and the preferred GPU sub-thread number is used as the preferred GPU sub-thread number corresponding to the each device category. That is, the preferred GPU sub-thread number corresponding to the representative device in the device category is used as the preferred GPU sub-thread number corresponding to all devices in the device category. The preferred GPU sub-thread number is a GPU sub-thread number used by the GPU of the representative device to execute the specified task with the shortest time consumption. Since the task execution effect is mainly reflected in the aspect of task time consumption, the embodiment of the present disclosure can determine whether a GPU sub-thread number is optimal based on the time consumption of executing the specified task. In some embodiments, it is possible to exhaustively enumerate all possible GPU sub-thread numbers and then make the representative device execute the specified task using each of the possible GPU sub-thread numbers, determine the corresponding time consumption for each GPU sub-thread number, and use the GPU sub-thread number with the shortest time consumption as the preferred GPU sub-thread number of the representative device, which can also be referred to as the optimal GPU sub-thread number of the representative device.

Due to the device categorization based on the GPU information of the various devices in the above step, all devices corresponding to each category actually have a certain GPU commonality. For example, for the category categorized by a GPU manufacturer or the category categorized by a GPU model, there is little difference between the GPUs of all devices in the same category. In most cases, some characteristics of the GPUs are changed and improved, and most characteristics are still the same. Therefore, for each category, the preferred GPU sub-thread number of the representative device is also the preferred GPU sub-thread number for other devices in the same category to some extent. Although not necessarily the most optimal, compared to a unified default GPU sub-thread number, the task execution effect is better because it is closer to the device's own GPU characteristics, and the required time is usually lower than the required time achieved with a unified default GPU sub-thread number.

In step S208, the configuration file is generated based on the mapping relationship between the each device category and the preferred GPU sub-thread number. Specifically, the mapping relationship (correspondence relationship) between each device category and the preferred GPU sub-thread number can be recorded in a file that can be used as a configuration file.

In practical applications, the configuration file can be published in a manner such as over a network. When each device executes a specified task that requires the GPU sub-thread number with the GPU, the configuration file can be obtained by network download, data import, etc., and then a preferred GPU sub-thread number corresponding to the device is searched from the configuration file. In some embodiments, the configuration file can be a large file that records a preferred GPU sub-thread number corresponding to each category and a device identifier (device model) corresponding to each category. All devices in the same category correspond to the same preferred GPU sub-thread number. In other implementations, the configuration file may comprise a plurality of subfiles, each of which records the preferred GPU sub-thread number corresponding to a category and a device identifier in te category. After obtaining the configuration file, the target device can directly search for its corresponding preferred GPU sub-thread number from the configuration file based on its own identifier. Many existing devices can obtain their corresponding preferred GPU sub-thread numbers through the configuration file. Thus, the configuration file is compatible with different device models, and automatic model matching can be achieved for different devices by reading the configuration file.

In the method for generating the configuration file provided in the embodiment of the present disclosure, since the categories are categorized according to the GPU information, and the devices corresponding to each category usually have a certain GPU commonality, the GPU sub-thread number used by the representative device to execute a specified task with the shortest time consumption (the preferred GPU sub-thread number of the representative device) can also be used as a preferred GPU sub-thread number for other devices in the category. That is, a preferred GPU sub-thread number corresponding to each device can be obtained accordingly. Compared to using a default GPU sub-thread number in the related art, the above method provided in the embodiment of the present disclosure can conveniently and quickly obtain the preferred GPU sub-thread number corresponding to each device and record the preferred GPU sub-thread number in the configuration file, thereby assisting to improve the task execution effect of each device at a later time. In addition, since the embodiment of the present disclosure is to obtain the preferred GPU sub-thread number of the representative device of each category, it is more feasible and requires less cost as compared to the method of separately obtaining preferred GPU sub-thread numbers for a large number of devices.

An embodiment of the present disclosure illustrates the method of categorizing a plurality of devices into a plurality of device categories based on GPU information, wherein the device categories are manufacturer categories or GPU model categories, which can be implemented in manners (1) and (2) below.
(1) If the GPU information is GPU manufacturer names, the plurality of devices are categorized into a plurality of manufacturer categories based on the GPU manufacturer name of each of the plurality of devices, wherein all devices corresponding to each of the plurality of manufacturer categories have a same manufacturer name. For example, taking the Android mobile devices as an example, they can be mainly categorized into three major manufacturers: Qualcomm, Mali and PowerVR. It can be understood that there are relatively few existing GPU manufacturers, so the plurality of devices can be roughly categorized into a plurality of manufacturer categories. For example, devices using GPUs manufactured by Qualcomm belong to the Qualcomm category, and devices using GPUs manufactured by Mali belong to the Mali category.

That is to say, in some embodiments, the GPU information comprises a GPU manufacturer name; and the categorizing of the plurality of devices into the plurality of device categories based on the GPU information comprises: categorizing the plurality of devices into a plurality of manufacturer categories based on the GPU manufacturer name of each of the plurality of devices, wherein all devices corresponding to each of the plurality of manufacturer categories have a same manufacturer name.

(2) If the GPU information is GPU models, the plurality of devices are categorized into a plurality of GPU model categories based on the GPU model of each of the plurality of devices, wherein all devices corresponding to each of the plurality of GPU model categories have a same GPU model. It can be understood that although there are many existing devices, many of them use the same GPU model, so the plurality of devices can be finely categorized into a plurality of GPU model categories.

That is to say, in some embodiments, the GPU information comprises a GPU model; and the categorizing of the plurality of devices into the plurality of device categories based on the GPU information comprises: categorizing the plurality of devices into a plurality of GPU model categories based on the GPU model of each of the plurality of devices, wherein all devices corresponding to each of the plurality of GPU model categories have a same GPU model.

It can be understood that the above method (1) is a coarse-grained categorization method. For example, there are only three or four mainstream manufacturers, resulting in a correspondingly smaller number of categories. The above method (2) is a fine-grained categorization method. For example, there are about 50 mainstream GPU models, which results in a larger number of categories, but still far less than the number of several thousands of devices. In practical applications, the above method (1) or (2) can be flexibly selected according to needs. For example, if there are no high time consumption requirements for executing the specified task on a GPU, the method (1) can simply be used. If there are high time consumption requirements, the method (2) above can be used for categorization. The above is only an example and should not be considered as a limitation. In practical applications, it is also possible to perform categorization according to a series of categories under the same GPU manufacturer based on GPU information, such as Mali 5 category, Mali 6 category, etc..

After the categorization of the plurality of device categories, for each device category, a representative device can be selected from all the devices corresponding to the device category, which can be achieved, for example, in the following steps 1 and 2.

In step 1, index data of each of the plurality of devices corresponding to the device category is obtained based on a preset measurement index, wherein the preset measurement index comprises a market coverage rate and/or device performance. Market coverage rate, also known as market share, can be determined through network statistics. In some embodiments, device performance can be reflected by the time it takes for a device to execute a task. For example, for the same task, the shorter the time, the better the device performance. In practical applications, because all devices are publicly used in the market, and the performance of the devices are also public parameters, the performance of any device can be easily and directly obtained over the network.

In step 2, the representative device is selected from all the devices corresponding to the device category based on the index data of the each of the plurality of devices.

By comparing the index data of the plurality of devices, the most typical device can be found as the representative device, i.e., the most typical device among all devices in the device category can be used as the representative device. In some embodiments, a mid-range device in each category can be used as the representative device. In this case, a median value of the index data of all the devices corresponding to the category can be determined based on the index data of the each of the plurality of devices; and then a device, of which index data is closest to the median value, is selected from all the devices corresponding to the category, and the device selected is used as the representative device of the category. The device, of which index data is the median (or closest to the median), is the mid-range device. It can be understood that the mid-range device of each category usually has the general characteristics of the category. Those devices in a category, whether low-end devices or high-end devices, have GPU performance that is close to the GPU performance of the mid-range device to some extent. Therefore, the mid-range device can be selected to objectively represent all the devices in the category, and then the preferred GPU sub-thread number of the mid-range device can be used as a preferred GPU sub-thread number corresponding to another device in the same category.

Further, an embodiment of the present disclosure provides a specific method for obtaining a preferred GPU sub-thread number corresponding to the representative device of the device category, which comprises steps a to c below.

In step a, a plurality of candidate GPU sub-thread numbers are obtained. In some embodiments, a plurality of candidate GPU sub-thread numbers can be determined based on an enumeration method, that is, possible GPU sub-thread numbers can be listed in an exhaustive way.

In step b, for each of the plurality of candidate GPU sub-thread numbers, the each of the plurality of candidate GPU sub-thread numbers is used as a parameter for a preset OpenCL program, and time consumption for the representative device of the each device category to adopt the preset OpenCL program to execute the specified task is obtained. Because OpenCL widely supports GPU, a preset OpenCL program can be used to execute a specified task, and the GPU sub-thread number is a necessary parameter for the OpenCL program. Specifically, it is a kernel function parameter of OpenCL that directly affects the performance (time consumption) of OpenCL program to execute the specified task. Therefore, all devices in the embodiment of the present disclosure can execute the specified task using the preset OpenCL program. In practical applications, the time it takes to execute the specified task can be determined using a preset timing method, for example, using the clGetEventProfilingInfo function for timing.

In step c, a candidate GPU sub-thread number corresponding to shortest time consumption is used as the preferred GPU sub-thread number corresponding to the representative device of the each device category.

The candidate GPU sub-thread number corresponding to the shortest time consumption is actually an optimal GPU sub-thread number corresponding to the representative device, which can achieve the best task execution effect compared to other candidate GPU sub-thread numbers. In addition, in practical applications, since the GPU sub-thread number is a kernel function parameter of OpenCL, and there may be multiple kernel functions, the corresponding preferred GPU sub-thread number can be determined for each kernel function. That is, steps a to c are performed for each kernel function, and the final preferred GPU sub-thread number of the representative device comprises preferred GPU sub-thread numbers corresponding to multiple kernel functions.

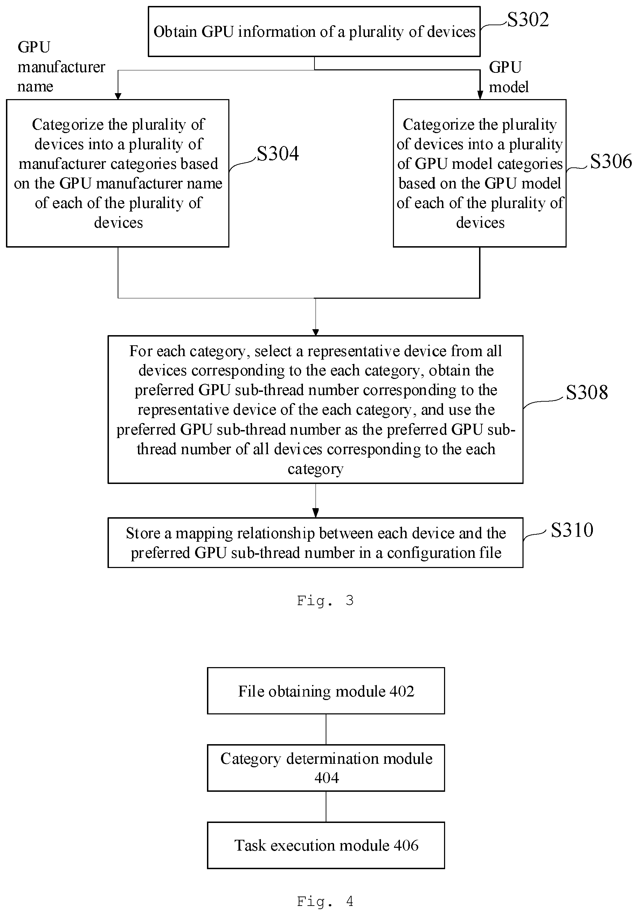

On the basis of above, an embodiment of the present disclosure further provides a method for generating a configuration file. FIG. 3 is a schematic flowchart of a method for generating a configuration file provided by an embodiment of the present disclosure. The method mainly comprises the following steps S302 to S310.

In step S302, GPU information of a plurality of devices is obtained. Each of the plurality of devices is configured with a GPU. If the GPU information is a GPU manufacturer name, the method proceeds to step S304. If the GPU information is a GPU model, the method proceeds to step S306.

In step S304, the plurality of devices are categorized into a plurality of manufacturer categories based on the GPU manufacturer name of each of the plurality of devices.

In step S306, the plurality of devices are categorized into a plurality of GPU model categories based on the GPU model of each of the plurality of devices.

In step S308, for the each category, a representative device is selected from all devices corresponding to the each category, the preferred GPU sub-thread number corresponding to the representative device of the each category is obtained, and the preferred GPU sub-thread number is used as the preferred GPU sub-thread number of all devices corresponding to the each category.

In step S310, a mapping relationship between each device and the preferred GPU sub-thread number is stored in a configuration file. In this way, the configuration file can be directly provided to a target device that executes a specified task, so that the GPU of the target device can execute the specified task based on the corresponding preferred GPU sub-thread number recorded in the configuration file.

In practical applications, the above steps S304 and S306 can be performed either or both, and two configuration files are generated for different categories, one being a coarse-grained configuration file categorized by a manufacturer name and the other being a fine-grained configuration file categorized by a GPU model. A device can then determine a preferred GPU sub-thread number in which configuration file to be used based on the time requirements of a task to be executed. For example, a preferred GPU sub-thread number in the coarse-grained configuration file can be used for lower time requirements, and a preferred GPU sub-thread number in the fine-grained configuration file can be used for higher time requirements.

For the above steps shown in FIG. 3 and the beneficial effect provided by the embodiment of the present disclosure, reference can be made to the relevant content mentioned above, which will not be repeated here.

In addition, in practical applications, since the GPU is a chip mounted on a graphics card, in some embodiments, a GPU model can be directly equated with a graphics card model . Therefore, in the above-mentioned method provided by the embodiment of the present disclosure, the GPU model involved can also be the graphics card model, such as Adreno graphics card, Mali graphics card, powerVR graphics card, AMD graphics card, Intel graphics card, AMD graphics card, Nvidia graphics card, and so on. OpenCL can widely support different types of GPUs, which can also be said that OpenCL widely supports different types of graphics cards.

In summary, in the above task execution method provided in the embodiment of the present disclosure, a target device configured with a GPU can obtain a configuration file that records the mapping relationship between the device category and the preferred GPU sub-thread number when executing a specified task, and execute the specified task by using a preferred GPU sub-thread number corresponding to a target device category to which the target device belongs, wherein the preferred GPU sub-thread number corresponding to the target device category is a GPU sub-thread number used by a representative device in the device category to execute the specified task with the shortest time consumption. Since devices in the same device category usually have a certain commonality, the target device may take less time to execute a task using the preferred GPU sub-thread number corresponding to the representative device in the device category. Compared to a default GPU sub-thread number, the above method is easy to implement and can effectively improve the task execution effect.

The above method can be well applied to scenarios involving OpenCL (which requires the GPU sub-thread number), effectively improving the task execution performance based on OpenCL. Research has shown that a performance gain of 10%-70% can be achieved.

Corresponding to the aforementioned task execution method provided by an embodiment of the present disclosure, an embodiment of the present disclosure provides a task execution apparatus. The apparatus is applied to a target device configured with a GPU. FIG. 4 shows a schematic structure diagram of a task execution apparatus, the task execution apparatus comprising: a file obtaining module 402, a category determination module 404, and a task execution module 406.

The file obtaining module 402 is configured to obtain a configuration file in response to receiving an execution instruction for a specified task, wherein the specified task is a task executed based on the GPU, and the configuration file comprises a mapping relationship between a device category and a preferred GPU sub-thread number, wherein the preferred GPU sub-thread number is number of a sub-thread of the GPU used by a representative device in the device category taking shortest time to execute the specified task based on the GPU of the representative device.

The category determination module 404 is configured to determine a target device category to which the target device belongs based on the configuration file.

The task execution module 406 is configured to execute the specified task by using the preferred GPU sub-thread number corresponding to the target device category.

The above apparatus of the embodiment of the present disclosure can obtain a configuration file that is recorded with the mapping relationship between a device category and a preferred GPU sub-thread number when executing a specified task, and execute the specified task by using a preferred GPU sub-thread number corresponding to a target device category to which a target device belongs, the preferred GPU sub-thread number corresponding to the target device category being a GPU sub-thread number used by a representative device in the device category to execute the specified task with the shortest time. Due to devices in the same device category usually have a commonality, the time required for the target device to execute the task using the preferred GPU sub-thread number corresponding to the representative device in the device category is usually shorter. Compared to a default GPU sub-thread number, the above method is easy to implement and can effectively improve task execution effect.

In some embodiments, the configuration file is recorded with device identifiers of a plurality of devices corresponding to each device category; and the category determination module is configured to search for the device category corresponding to a device identifier of the target device in the configuration file, and use the device category searched as the target device category to which the target device belongs.

In some embodiments, the configuration file is recorded with a categorization method of the device category, the categorization method comprising categorization by a GPU manufacturer name or categorization by a GPU model; and the category determination module is configured to determine the target device category to which the target device belongs based on the categorization method of the device category recorded in the configuration file and GPU information of the target device.

In some embodiments, the GPU information comprises the GPU manufacturer name or the GPU model.

In some embodiments, all devices corresponding to each device category have a specific GPU commonality, and different device categories correspond to different GPU commonalities.

In some embodiments, the apparatus further comprises a file generation module configured to: obtain GPU information of a plurality of devices, wherein each of the plurality of devices is configured with a GPU; categorize the plurality of devices into a plurality of device categories based on the GPU information, each device category of the plurality of device categories corresponding to a plurality of devices; for the each device category, select a representative device from all devices corresponding to the each device category, obtain the preferred GPU sub-thread number corresponding to the representative device of the each device category, and use the preferred GPU sub-thread number as the preferred GPU sub-thread number corresponding to the each device category; and generate the configuration file based on the mapping relationship between the each device category and the preferred GPU sub-thread number.

In some embodiments, the file generation module is configured to: obtain a plurality of candidate GPU sub-thread numbers; for each of the plurality of candidate GPU sub-thread numbers, use the each of the plurality of candidate GPU sub-thread numbers as a parameter for a preset OpenCL program, and obtain time consumption for the representative device of the each device category to adopt the preset OpenCL program to execute the specified task; and use a candidate GPU sub-thread number corresponding to shortest time consumption as the preferred GPU sub-thread number corresponding to the representative device of the each device category.

In some embodiments, the GPU information comprises a GPU manufacturer name. The file generation module is configured to categorize the plurality of devices into a plurality of manufacturer categories based on the GPU manufacturer name of each of the plurality of devices, wherein all devices corresponding to each of the plurality of manufacturer categories have a same manufacturer name.

In some embodiments, the GPU information comprises a GPU model. The file generation module is configured to categorize the plurality of devices into a plurality of GPU model categories based on the GPU model of each of the plurality of devices, wherein all devices corresponding to each of the plurality of GPU model categories have a same GPU model.

In some embodiments, the GPU information comprises a GPU manufacturer name or a GPU model; the file generation module is configured to: if the GPU information is the GPU manufacturer name, categorize the plurality of devices into a plurality of manufacturer categories based on the GPU manufacturer name of each of the plurality of devices, wherein all devices corresponding to each of the plurality of manufacturer categories have a same manufacturer name; if the GPU information is the GPU model, categorize the plurality of devices into a plurality of GPU model categories based on the GPU model of each of the plurality of devices, wherein all devices corresponding to each of the plurality of GPU model categories have a same GPU model.

In some embodiments, the file generation module is configured to: obtain index data of each of the plurality of devices corresponding to the each device category based on a preset measurement index, wherein the preset measurement index comprises a market coverage rate and/or device performance; and select the representative device from all the devices corresponding to the each device category based on the index data of the each of the plurality of devices.

In some embodiments, the file generation module is configured to select a most typical device from all the devices corresponding to the each device category as the representative device by comparing the index data of the plurality of devices.

In some embodiments, the file generation module is configured to: determine a median value of the index data of all the devices corresponding to the each device category based on the index data of the each of the plurality of devices; and select a device, of which index data is closest to the median value, from all the devices corresponding to the each device category, and use the device selected as the representative device of the each device category.

The task execution apparatus provided in the embodiment of the present disclosure can execute the task execution method provided in any embodiment of the present disclosure, and has functional modules corresponding to the execution method and the beneficial effect.

Those skilled in the art can clearly understand that, for the convenience and simplicity of description, for the specific working processes of the apparatus embodiments described above, reference can be made to the corresponding processes in the method embodiment, which will not be repeated here.

An embodiment of the present disclosure further provides an electronic device, comprising: a processor; and a memory configured to store executable instructions for the processor; wherein the processor is configured to read the executable instructions from the memory and execute the executable instructions to implement the task execution method described above.

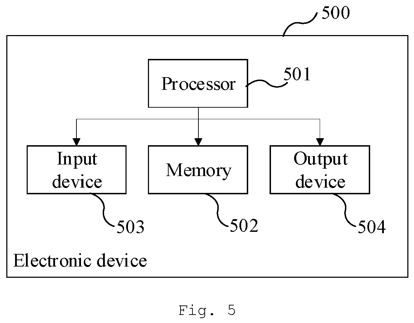

FIG. 5 is a schematic structure diagram of an electronic device provided by an embodiment of the present disclosure. As shown in FIG. 5, the electronic device 500 comprises one or more processors 501 and a memory 502.

The processor 501 may be a central processing unit (CPU) or a processing unit in other forms having data processing capability and/or instruction execution capability, and may control other components in the electronic device 500 to perform desired functions.

The memory 502 may comprise one or more computer program products, which may comprise various forms of computer-readable storage media, such as volatile memory and/or non-volatile memory. For example, the volatile memory may comprise random access memory (RAM) and/or cache memory or the like. For example, the non-volatile storage medium comprises read-only memory (ROM), hard disk, flash memory or the like. One or more computer program instructions can be stored on the computer-readable storage medium, and the processor 501 can execute the program instructions to realize the task execution method and/or other desired functions in the embodiments of the present disclosure described above. Various contents such as input signals, signal components, noise components and the like can also be stored in the computer-readable storage medium.

In an embodiment, the electronic device 500 may further comprise: an input device 503 and an output device 504, which are interconnected by a bus system and/or other form of connection mechanism (not shown).

In addition, the input device 503 may also comprise, for example, a keyboard, a mouse, or the like.

The output device 504 can output various information to the outside, comprising determined distance information, orientation information, or the like. The output device 504 may comprise, for example, a display, a speaker, a printer, a communication network, a remote output device connected thereto, or the like.

Of course, to simplify, only some components related to the present disclosure in the electronic device 500 are shown in FIG. 5, and components such as buses, input/output interfaces, and the like are omitted. In addition, depending on the specific application, the electronic device 500 may also comprise any other appropriate components.

In addition to the above methods and devices, an embodiment of the present disclosure can also be a computer program product, which comprises computer program instructions that, when executing by a processor, cause the processor to execute the task execution method provided in the embodiments of the present disclosure.

The computer program product can write program codes for performing the operations of the embodiments of the present disclosure in any combination of one or more program design languages, the program design languages comprising object-oriented program design languages, such as Java, C++, etc, as well as conventional procedural program design languages, such as "C" language or similar program design language. The program code may be completely or partly executed on a user device, or executed as an independent software package, partly executed on the user device and partly executed on a remote computing device, or completely executed on a remote computing device or server.

In addition, an embodiment of the present disclosure can also be a computer readable storage medium (e.g., a non-transitory computer-readable medium) having stored thereon computer program instructions that, when executed by a processor, cause the processor to perform the task execution method provided in the embodiments of the present disclosure.

The computer readable storage medium can employ any combination of one or more readable media. The readable medium can be a readable signal medium or a readable storage medium. The readable storage medium can comprise, for example, but not limited to, an electronic, magnetic, optical, electromagnetic, infrared, or semiconductor system, apparatus, or device, or any combination of the above. More specific examples (non-exhaustive lists) of readable storage media comprise: electrical connection with one or more wires, portable disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing.

An embodiment of the present disclosure further provides a computer program product containing a computer program or instructions that, when executed by a processor, implement the task execution method in the embodiments of the present disclosure.

An embodiment of the present disclosure further provides a computer program, comprising: instructions that, when executed by a processor, cause the processor to perform the task execution method in the embodiments of the present disclosure.

It should be noted that in the description, the use of relational terms such as "first" and "second" and the like are used solely to distinguish one entity or action from another entity or action without necessarily requiring or implying any actual such relationship or order between such entities or actions. Further, terms "comprise", "include" or their any other variations are intended to encompass non-exclusive inclusion, so that a process, method, product or device comprising a series of factors may comprise not only these factors, but also other factors that are not listed explicitly, or factors intrinsic to this process, method, product or device. Without further limitation, a factor defined by wording "comprise one..." does not exclude the existence of other same factors in a process, method, product or device comprising such factor.

The above descriptions are only specific embodiments of the present disclosure, so that those skilled in the art can understand or implement the present disclosure. Various modifications to these embodiments will be apparent to those skilled in the art, and the generic principles defined herein may be implemented in other embodiments without departing from the scope of the present disclosure.

## Claims

1. A task execution method applied to a target device configured with a graphics processing unit (GPU), the task execution method comprising:
obtaining a configuration file in response to receiving an execution instruction for a specified task, wherein the specified task is a task executed based on the GPU, and the configuration file comprises a mapping relationship between a device category and a preferred GPU sub-thread number, wherein the preferred GPU sub-thread number is a number of a sub-thread of the GPU used by a representative device in the device category taking shortest time to execute the specified task based on the GPU of the representative device, and a GPU sub-thread number is a number of sub-threads in a same thread bundle;
determining a target device category to which the target device belongs based on the configuration file; and
executing the specified task by using the preferred GPU sub-thread number corresponding to the target device category;
wherein the configuration file is generated by:
obtaining GPU information of a plurality of devices, wherein each of the plurality of devices is configured with a GPU;
categorizing the plurality of devices into a plurality of device categories based on the GPU information, each device category of the plurality of device categories corresponding to a plurality of devices;
for the each device category, selecting a representative device from all devices corresponding to the each device category, obtaining the preferred GPU sub-thread number corresponding to the representative device of the each device category, and using the preferred GPU sub-thread number as the preferred GPU sub-thread number corresponding to the each device category; and
generating the configuration file based on the mapping relationship between the each device category and the preferred GPU sub-thread number.

2. The task execution method according to claim 1, wherein the configuration file is recorded with device identifiers of a plurality of devices corresponding to each device category; and
the determining of the target device category to which the target device belongs based on the configuration file comprises:
searching for the device category corresponding to a device identifier of the target device in the configuration file, and using the device category searched as the target device category to which the target device belongs.

3. The task execution method according to claim 1, wherein the configuration file is recorded with a categorization method of the device category, the categorization method comprising categorization by a GPU manufacturer name or categorization by a GPU model; and
the determining of the target device category to which the target device belongs based on the configuration file comprises:
determining the target device category to which the target device belongs based on the categorization method of the device category recorded in the configuration file and GPU information of the target device.

4. The task execution method according to claim 3, wherein the GPU information comprises the GPU manufacturer name or the GPU model.

5. The task execution method according to any one of claims 1 to 4, wherein all devices corresponding to a device category have a specific GPU commonality, and different device categories correspond to different GPU commonalities.

6. The task execution method according to any one of claims 1 to 5, the obtaining of the preferred GPU sub-thread number corresponding to the representative device of the each device category comprises:
obtaining a plurality of candidate GPU sub-thread numbers;
for each of the plurality of candidate GPU sub-thread numbers, using the each of the plurality of candidate GPU sub-thread numbers as a parameter for a preset open computing language OpenCL program, and obtaining time consumption for the representative device of the each device category to adopt the preset OpenCL program to execute the specified task; and
using a candidate GPU sub-thread number corresponding to shortest time consumption as the preferred GPU sub-thread number corresponding to the representative device of the each device category.

7. The task execution method according to any one of claims 1 to 6, wherein the GPU information comprises a GPU manufacturer name; and
the categorizing of the plurality of devices into the plurality of device categories based on the GPU information comprises: categorizing the plurality of devices into a plurality of manufacturer categories based on the GPU manufacturer name of each of the plurality of devices, wherein all devices corresponding to each of the plurality of manufacturer categories have a same manufacturer name.

8. The task execution method according to claim any one of claims 1 to 6, wherein the GPU information comprises a GPU model; and
the categorizing of the plurality of devices into the plurality of device categories based on the GPU information comprises: categorizing the plurality of devices into a plurality of GPU model categories based on the GPU model of each of the plurality of devices, wherein all devices corresponding to each of the plurality of GPU model categories have a same GPU model.

9. The task execution method according to any one of claims 1 to 8, wherein the selecting of the representative device from all devices corresponding to the each device category comprises:
obtaining index data of each of the plurality of devices corresponding to the each device category based on a preset measurement index, wherein the preset measurement index comprises a market coverage rate and/or device performance; and
selecting the representative device from all the devices corresponding to the each device category based on the index data of the each of the plurality of devices.

10. The task execution method according to claim 9, wherein the selecting of the representative device from all the devices corresponding to the each device category based on the index data of the each of the plurality of devices comprises: selecting a most typical device from all the devices corresponding to the each device category as the representative device by comparing the index data of the plurality of devices.

11. The task execution method according to claim 9 or 10, wherein the selecting of the representative device from all the devices corresponding to the each device category based on the index data of the each of the plurality of devices comprises:
determining a median value of the index data of all the devices corresponding to the each device category based on the index data of the each of the plurality of devices; and
selecting a device, of which index data is closest to the median value, from all the devices corresponding to the each device category, and using the device selected as the representative device of the each device category.

12. An electronic device, comprising:
a processor; and
a memory configured to store executable instructions for the processor;
wherein the processor is configured to read the executable instructions from the memory and execute the executable instructions to implement the task execution method according to any one of claims 1 to 11.

13. A computer-readable storage medium on which a computer program is stored, wherein the computer program, when executed by a processor, is configured to perform the task execution method according to any one of claims 1 to 11.

## Patentansprüche

1. Aufgabenausführungsverfahren, das auf eine mit einer Grafikverarbeitungseinheit (GPU) konfigurierte Zielvorrichtung angewendet wird, wobei das Aufgabenausführungsverfahren umfasst:
Erhalten einer Konfigurationsdatei als Reaktion auf Empfangen einer Ausführungsanweisung für eine festgelegte Aufgabe, wobei die festgelegte Aufgabe eine auf der Grundlage der GPU ausgeführte Aufgabe ist, und die Konfigurationsdatei eine Zuordnungsbeziehung zwischen einer Vorrichtungskategorie und einer bevorzugten GPU-Subthread-Nummer umfasst, wobei die bevorzugte GPU-Subthread-Nummer eine Nummer eines Subthreads der GPU ist, der von einer repräsentativen Vorrichtung in der Vorrichtungskategorie verwendet wird, die die kürzeste Zeit benötigt, um die festgelegte Aufgabe auf der Grundlage der GPU der repräsentativen Vorrichtung auszuführen, und eine GPU-Subthread-Nummer eine Nummer eines Subthreads in einem Thread-Bündel ist;
Bestimmen einer Zielvorrichtungskategorie, zu der die Zielvorrichtung gehört, auf der Grundlage der Konfigurationsdatei; und
Ausführen der festgelegten Aufgabe unter Verwendung der bevorzugten GPU-Subthread-Nummer, die der Zielvorrichtungskategorie entspricht;
wobei die Konfigurationsdatei generiert wird durch:
Erhalten von GPU-Informationen einer Vielzahl von Vorrichtungen, wobei jede der Vielzahl von Vorrichtungen mit einer GPU konfiguriert ist;
Kategorisieren der Vielzahl von Vorrichtungen in eine Vielzahl von Vorrichtungskategorien auf der Grundlage der GPU-Informationen, wobei jede Vorrichtungskategorie der Vielzahl von Vorrichtungskategorien einer Vielzahl von Vorrichtungen entspricht;
für jede Vorrichtungskategorie, Auswählen einer repräsentativen Vorrichtung aus allen Vorrichtungen, die jeder Vorrichtungskategorie entsprechen, Erhalten der bevorzugten GPU-Subthread-Nummer, die der repräsentativen Vorrichtung jeder Vorrichtungskategorie entspricht, und Verwenden der bevorzugten GPU-Subthread-Nummer als die bevorzugte GPU-Subthread-Nummer, die jeder Vorrichtungskategorie entspricht; und
Generieren der Konfigurationsdatei auf der Grundlage der Zuordnungsbeziehung zwischen jeder Vorrichtungskategorie und der bevorzugten GPU-Subthread-Nummer.

2. Aufgabenausführungsverfahren nach Anspruch 1, wobei die Konfigurationsdatei mit Vorrichtungskennungen einer Vielzahl von Vorrichtungen aufgezeichnet ist, die jeder Vorrichtungskategorie entsprechen; und
das Bestimmen der Zielvorrichtungskategorie, zu der die Zielvorrichtung gehört, auf der Grundlage der Konfigurationsdatei umfasst:
Suchen nach der Vorrichtungskategorie, die einer Vorrichtungskennung der Zielvorrichtung in der Konfigurationsdatei entspricht, und Verwenden der gesuchten Vorrichtungskategorie als die Zielvorrichtungskategorie, zu der die Zielvorrichtung gehört.

3. Aufgabenausführungsverfahren nach Anspruch 1, wobei die Konfigurationsdatei mit einem Kategorisierungsverfahren der Vorrichtungskategorie aufgezeichnet wird, wobei das Kategorisierungsverfahren eine Kategorisierung nach dem GPU-Herstellernamen oder eine Kategorisierung nach dem GPU-Modell umfasst; und
das Bestimmen der Zielvorrichtungskategorie, zu der die Zielvorrichtung gehört, auf der Grundlage der Konfigurationsdatei umfasst:
Bestimmen der Zielvorrichtungskategorie, zu der die Zielvorrichtung gehört, auf der Grundlage des Kategorisierungsverfahrens der in der Konfigurationsdatei gespeicherten Vorrichtungskategorie und der GPU-Informationen der Zielvorrichtung.

4. Aufgabenausführungsverfahren nach Anspruch 3, wobei die GPU-Informationen den GPU-Herstellernamen oder das GPU-Modell umfassen.

5. Aufgabenausführungsverfahren nach einem der Ansprüche 1 bis 4, wobei alle Vorrichtungen, die einer Vorrichtungskategorie entsprechen, eine spezifische GPU-Gemeinsamkeit aufweisen, und unterschiedliche Vorrichtungskategorien unterschiedlichen GPU-Gemeinsamkeiten entsprechen.

6. Aufgabenausführungsverfahren nach einem der Ansprüche 1 bis 5, wobei das Erhalten der bevorzugten GPU-Subthread-Nummern, die der repräsentativen Vorrichtung jeder Vorrichtungskategorie entspricht, umfasst:
Erhalten einer Vielzahl von GPU-Subthread-Kandidatennummern;
für jede der Vielzahl von GPU-Subthread-Kandidatennummern, Verwenden jeder der Vielzahl von GPU-Subthread-Kandidatennummern als Parameter für ein voreingestelltes OpenCL-Programm und Erhalten eines Zeitverbrauchs für die repräsentative Vorrichtung jeder Vorrichtungskategorie zum Anwenden des voreingestellten OpenCL-Programms zur Ausführung der festgelegten Aufgabe; und
Verwenden einer GPU-Subthread-Kandidatennummer, die dem kürzesten Zeitverbrauch entspricht, als die bevorzugte GPU-Subthread-Nummer, die der repräsentativen Vorrichtung jeder Vorrichtungskategorie entspricht.

7. Aufgabenausführungsverfahren nach einem der Ansprüche 1 bis 6, wobei die GPU-Informationen einen GPU-Herstellernamen umfassen; und
das Kategorisieren der Vielzahl von Vorrichtungen in eine Vielzahl von Vorrichtungskategorien auf der Grundlage der GPU-Informationen umfasst: Kategorisieren der Vielzahl von Vorrichtungen in eine Vielzahl von Herstellerkategorien auf der Grundlage des GPU-Herstellernamens jeder der Vielzahl von Vorrichtungen, wobei alle Vorrichtungen, die jeder der Vielzahl von Herstellerkategorien entsprechen, denselben Herstellernamen aufweisen.

8. Aufgabenausführungsverfahren nach einem der Ansprüche 1 bis 6, wobei die GPU-Informationen ein GPU-Modell umfassen; und
das Kategorisieren der Vielzahl von Vorrichtungen in eine Vielzahl von Vorrichtungskategorien auf der Grundlage der GPU-Informationen umfasst: Kategorisieren der Vielzahl von Vorrichtungen in eine Vielzahl von GPU-Modellkategorien auf der Grundlage des GPU-Modells jeder einzelnen Vorrichtung der Vielzahl von Vorrichtungen, wobei alle Vorrichtungen, die jeder der Vielzahl von GPU-Modellkategorien entsprechen, dasselbe GPU-Modell aufweisen.

9. Aufgabenausführungsverfahren nach einem der Ansprüche 1 bis 8, wobei das Auswählen der repräsentativen Vorrichtung aus allen Vorrichtungen, die jeder Vorrichtungskategorie entsprechen, umfasst:
Erhalten von Indexdaten von jeder der Vielzahl von Vorrichtungen, die jeder Vorrichtungskategorie entsprechen, auf der Grundlage eines voreingestellten Messindexes, wobei der voreingestellte Messindex eine Marktabdeckungsrate und/oder eine Vorrichtungsleistung umfasst; und
Auswählen der repräsentativen Vorrichtung aus allen Vorrichtungen, die jeder Vorrichtungskategorie entsprechen, auf der Grundlage der Indexdaten für jede der Vielzahl von Vorrichtungen.

10. Aufgabenausführungsverfahren nach Anspruch 9, wobei das Auswählen der repräsentativen Vorrichtung aus allen Vorrichtungen, die jeder Vorrichtungskategorie entsprechen, auf der Grundlage der Indexdaten jeder der Vielzahl von Vorrichtungen umfasst: Auswählen einer typischsten Vorrichtung aus allen Vorrichtungen, die jeder Vorrichtungskategorie entsprechen, als die repräsentative Vorrichtung durch Vergleichen der Indexdaten der Vielzahl von Vorrichtungen.

11. Aufgabenausführungsverfahren nach Anspruch 9 oder 10, wobei das Auswählen der repräsentativen Vorrichtung aus allen Vorrichtungen, die jeder Vorrichtungskategorie entsprechen, auf der Grundlage der Indexdaten jeder der Vielzahl von Vorrichtungen umfasst:
Bestimmen eines Medianwertes der Indexdaten aller Vorrichtungen, die jeder Vorrichtungskategorie entsprechen, auf Grundlage der Indexdaten jeder der Vielzahl von Vorrichtungen; und
Auswählen einer Vorrichtung, deren Indexdaten dem Medianwert am nächsten kommen, aus allen Vorrichtungen, die jeder Vorrichtungskategorie entsprechen, und Verwenden der ausgewählten Vorrichtung als die repräsentative Vorrichtung jeder Vorrichtungskategorie.

12. Elektronische Vorrichtung, umfassend:
einen Prozessor; und
einen Speicher, der konfiguriert ist, um ausführbare Anweisungen für den Prozessor zu speichern;
wobei der Prozessor konfiguriert ist, um die ausführbaren Anweisungen aus dem Speicher zu lesen und die ausführbaren Anweisungen auszuführen, um das Aufgabenausführungsverfahren nach einem der Ansprüche 1 bis 11 zu implementieren.

13. Computerlesbares Speichermedium, auf dem ein Computerprogramm gespeichert ist, wobei das Computerprogramm, wenn es von einem Prozessor ausgeführt wird, konfiguriert ist, um das Aufgabenausführungsverfahren nach einem der Ansprüche 1 bis 11 durchzuführen.

## Revendications

1. Procédé d'exécution de tâche appliqué à un dispositif cible configuré avec une unité de traitement graphique (GPU), le procédé d'exécution de tâche comprenant :
l'obtention d'un fichier de configuration en réponse à la réception d'une instruction d'exécution relative à une tâche spécifiée, dans lequel la tâche spécifiée est une tâche exécutée sur la base de la GPU, et le fichier de configuration comprend une relation de mise en correspondance entre une catégorie de dispositifs et un numéro préféré de sous-fil de GPU, dans lequel le numéro préféré de sous-fil de GPU est un numéro de sous-fil de GPU utilisé par un dispositif représentatif de la catégorie de dispositifs utilisant le temps le plus court pour exécuter la tâche spécifiée sur la base de la GPU du dispositif représentatif, et un numéro de sous-fil de GPU est un numéro de sous-fil dans un même faisceau de fils ;
la détermination d'une catégorie du dispositif cible à laquelle appartient le dispositif cible sur la base du fichier de configuration ; et
l'exécution de la tâche spécifiée en utilisant le numéro préféré de sous-fil de GPU correspondant à la catégorie du dispositif cible ;
dans lequel le fichier de configuration est généré par :
l'obtention des informations de GPU d'une pluralité de dispositifs, dans lequel chacun de la pluralité de dispositifs est configuré avec une GPU ;
la catégorisation de la pluralité de dispositifs en une pluralité de catégories de dispositifs sur la base des informations de GPU, chaque catégorie de dispositifs de la pluralité de catégories de dispositifs correspondant à une pluralité de dispositifs ;
pour ladite chaque catégorie de dispositifs, la sélection d'un dispositif représentatif parmi tous les dispositifs correspondant à ladite chaque catégorie de dispositifs, l'obtention du numéro préféré de sous-fil de GPU correspondant au dispositif représentatif de ladite chaque catégorie de dispositifs, et l'utilisation du numéro préféré de sous-fil de GPU au titre du numéro préféré de sous-fil de GPU correspondant à ladite chaque catégorie de dispositifs ; et
la génération du fichier de configuration sur la base de la relation de mise en correspondance entre ladite chaque catégorie de dispositifs et le numéro préféré de sous-fil de GPU.

2. Procédé d'exécution de tâche selon la revendication 1, dans lequel le fichier de configuration est enregistré avec des identifiants de dispositifs d'une pluralité de dispositifs correspondant à chaque catégorie de dispositifs ; et
la détermination de la catégorie du dispositif cible à laquelle appartient le dispositif cible sur la base du fichier de configuration comprend :
la recherche de la catégorie de dispositifs correspondant à un identifiant de dispositif du dispositif cible dans le fichier de configuration, et l'utilisation de la catégorie de dispositifs recherchée au titre de la catégorie du dispositif cible à laquelle appartient le dispositif cible.

3. Procédé d'exécution de tâche selon la revendication 1, dans lequel le fichier de configuration est enregistré avec un procédé de catégorisation de la catégorie de dispositifs, le procédé de catégorisation comprenant une catégorisation selon un nom du fabricant de la GPU ou une catégorisation selon un modèle de la GPU ; et
la détermination de la catégorie du dispositif cible à laquelle appartient le dispositif cible sur la base du fichier de configuration comprend :
la détermination de la catégorie du dispositif cible à laquelle appartient le dispositif cible sur la base du procédé de catégorisation de la catégorie de dispositifs enregistrée dans le fichier de configuration et des informations de GPU du dispositif cible.

4. Procédé d'exécution de tâche selon la revendication 3, dans lequel les informations de GPU comprennent le nom du fabricant de la GPU ou le modèle de la GPU.

5. Procédé d'exécution de tâche selon l'une quelconque des revendications 1 à 4, dans lequel tous les dispositifs correspondant à une catégorie de dispositifs présentent une caractéristique commune de GPU spécifique, et différentes catégories de dispositifs correspondent à différentes caractéristiques communes de GPU.

6. Procédé d'exécution de tâche selon l'une quelconque des revendications 1 à 5, l'obtention du numéro préféré de sous-fil de GPU correspondant au dispositif représentatif de ladite chaque catégorie de dispositifs comprend :
l'obtention d'une pluralité de numéros de sous-fil de GPU candidats ;
pour chacun de la pluralité de numéros de sous-fil de GPU candidats, l'utilisation dudit chacun de la pluralité de numéros de sous-fil de GPU candidats à titre de paramètre destiné à un programme en langage informatique ouvert (OpenCL, Open Computing Language) prédéfini, et l'obtention du temps mis par le dispositif représentatif de ladite chaque catégorie de dispositifs pour adopter le programme OpenCL prédéfini de façon à exécuter la tâche spécifiée ; et
l'utilisation d'un numéro de sous-fil de GPU candidat correspondant au temps mis le plus court au titre du numéro préféré de sous-fil de GPU correspondant au dispositif représentatif de ladite chaque catégorie de dispositifs.

7. Procédé d'exécution de tâche selon l'une quelconque des revendications 1 à 6, dans lequel les informations de GPU comprennent un nom du fabricant de la GPU ; et
la catégorisation de la pluralité de dispositifs en la pluralité de catégories de dispositifs sur la base des informations de GPU consiste à : catégoriser la pluralité de dispositifs en une pluralité de catégories de fabricants sur la base du nom du fabricant de la GPU de chacun de la pluralité de dispositifs, dans lequel tous les dispositifs correspondant à chacune de la pluralité de catégories de fabricants ont un même nom de fabricant.

8. Procédé d'exécution de tâche selon l'une quelconque des revendications 1 à 6, dans lequel les informations de GPU comprennent un modèle de la GPU ; et
la catégorisation de la pluralité de dispositifs en la pluralité de catégories de dispositifs sur la base des informations de GPU consiste à : catégoriser la pluralité de dispositifs en une pluralité de catégories de modèles de GPU sur la base du modèle de la GPU de chaque dispositif de la pluralité de dispositifs, dans lequel tous les dispositifs correspondant à chacune de la pluralité de catégories de modèles de GPU ont un même modèle de GPU.

9. Procédé d'exécution de tâche selon l'une quelconque des revendications 1 à 8, dans lequel la sélection du dispositif représentatif parmi tous les dispositifs correspondant à ladite chaque catégorie de dispositifs comprend :
l'obtention des données d'indice de chacun de la pluralité de dispositifs correspondant à ladite chaque catégorie de dispositifs sur la base d'un indice de mesure prédéfini, dans lequel l'indice de mesure prédéfini comprend un taux de couverture du marché et/ou des performances du dispositif; et
la sélection du dispositif représentatif parmi tous les dispositifs correspondant à ladite chaque catégorie de dispositifs sur la base des données d'indice dudit chacun de la pluralité de dispositifs.

10. Procédé d'exécution de tâche selon la revendication 9, dans lequel la sélection du dispositif représentatif parmi tous les dispositifs correspondant à ladite chaque catégorie de dispositifs sur la base des données d'indice dudit chacun de la pluralité de dispositifs comprend : la sélection du dispositif le plus classique parmi tous les dispositifs correspondant à ladite chaque catégorie de dispositifs au titre du dispositif représentatif en comparant les données d'indice de la pluralité de dispositifs.

11. Procédé d'exécution de tâche selon la revendication 9 ou 10, dans lequel la sélection du dispositif représentatif parmi tous les dispositifs correspondant à ladite chaque catégorie de dispositifs sur la base des données d'indice dudit chacun de la pluralité de dispositifs comprend :
la détermination d'une valeur médiane des données d'indice de tous les dispositifs correspondant à ladite chaque catégorie de dispositifs sur la base des données d'indice dudit chacun de la pluralité de dispositifs ; et
la sélection d'un dispositif, dont les données d'indice sont les plus proches de la valeur médiane, parmi tous les dispositifs correspondant à ladite chaque catégorie de dispositifs, et l'utilisation du dispositif sélectionné au titre du dispositif représentatif de ladite chaque catégorie de dispositifs.

12. Dispositif électronique, comprenant :
un processeur ; et
une mémoire configurée pour stocker des instructions exécutables destinées au processeur ;
dans lequel le processeur est configuré pour lire les instructions exécutables à partir de la mémoire et pour exécuter les instructions exécutables afin de mettre en œuvre le procédé d'exécution de tâche selon l'une quelconque des revendications 1 à 11.

13. Support de stockage lisible par ordinateur sur lequel est stocké un programme informatique, dans lequel le programme informatique, lorsqu'il est exécuté par un processeur, est configuré pour exécuter le procédé d'exécution de tâche selon l'une quelconque des revendications 1 à 11.
